# EUROPEAN PATENT SPECIFICATION

(11) **EP 3 995 536 B1**
(45) Date of publication and mention of the grant of the patent: **18.06.2025**
(21) Application number: 20836260.8
(22) Date of filing: 30.06.2020
(51) Int. Cl.: C08K 5/18, C08K 7/06, C08L 101/00, C08L 63/00, C08J 5/24, B29C 70/00, B32B 27/00

(54) **PREPREG AND FIBER-REINFORCED COMPOSITE MATERIAL**
PREPREG UND FASERVERSTÄRKTES VERBUNDMATERIAL
PRÉIMPRÉGNÉ ET MATÉRIAU COMPOSITE RENFORCÉ DE FIBRES

(30) Priority: 05.07.2019 JP 2019125901
(43) Date of publication of application: 11.05.2022
(73) Proprietor: Toray Industries, Inc., Tokyo 103-8666 (JP)
(72) Inventor: KOCHI, Shinji, Iyo-gun, Ehime 791-3193 (JP); KIDO, Daisuke, Iyo-gun, Ehime 791-3193 (JP); KOMORIYA, Aya, Iyo-gun, Ehime 791-3193 (JP)
(74) Representative: Mewburn Ellis LLP
(86) International application number: PCT/JP2020/025662
(87) International publication number: WO 2021/006114

(56) References cited:
- WO-A1-2016/136052
- WO-A1-2019/098243
- WO-A1-2019/107457
- JP-A- 2010 095 557
- JP-A- 2019 077 763
- US-A- 5 087 657
- US-A1- 2012 058 297
- US-A1- 2018 051 125
- US-B2- 9 683 072
- US-B2- 9 957 387

## Description

### TECHNICAL FIELD

The present invention relates to a prepreg that shows a high processability in an automated lay-up device and serves to produce a cured product with a high toughness and high impact strength and also relates to a production method therefor.

### BACKGROUND ART

Fiber reinforced composite materials made of reinforcing fibers such as glass fiber, carbon fiber, and aramid fiber, and cured products of thermosetting resins such as unsaturated polyester resin, vinyl ester resin, epoxy resin, phenol resin, cyanate ester resin, and bismaleimide resin, have very good mechanical properties such as high strength and elastic modulus and are high in heat resistance and corrosion resistance, although light in weight, and therefore, they have been applied in many fields including the manufacturing of aircraft members, spacecraft members, automobile members, ship members, civil engineering and construction materials, and sporting goods. In particular, fiber reinforced composite materials incorporating continuous fibers have been used in applications requiring high performance, where carbon fiber, which is high in specific strength and specific elastic modulus, is often adopted as reinforcing fiber while epoxy resin, which have good mechanical properties and high heat resistance and chemical resistance and can achieve strong adhesion to carbon fiber, is often used as matrix resin.

In recent years, industries for manufacturing large sized composite materials including those for aircraft commonly adopt such methods as ATL (automated tape layup) and AFP (automated fiber placement) in order to lay up prepreg layers using an automated lay-up device because they can achieve a higher productivity than the hand lay-up method. In particular, the AFP method is suitable for producing parts containing a relatively large number of curved faces such as aircraft fuselage and can realize high-yield material production, and accordingly, this method has been frequently adopted in recent years. In the AFP method, about ten to several tens of slit tape prepregs with widths of 3 to 13 mm, which are prepared by cutting a prepreg into a tape-like shape in the direction of the reinforcing fibers, are passed between guide rolls, collected on a machine head, and laid up on a base. In this step, as the guide rolls and the slit tape prepregs abrade each other, the matrix resin contained in the slit tape prepregs tends to adhere to the guide rolls and cause the problem of a decrease in productivity. Patent document 1 describes a prepreg and a production method therefor wherein a high handleability and processability are achieved and composites with good mechanical properties can be produced as a result of appropriately controlling the viscosity and glass transition temperature of the epoxy resin composition existing on both surfaces of the prepreg and also controlling the viscosity of the epoxy resin composition existing in the thickness-directional center portion.

Furthermore, for the purpose of optimizing the tackiness properties of the prepreg and improving the molding workability, Patent document 2 discloses a method for reducing the tackiness of the prepreg by using a matrix resin having a high viscosity. Patent document 3 discloses a prepreg, carbon fiber, a thermosetting resin selected from the groups consisting of a glycidyl amine type epoxy resin and a glycidyl ether type epoxy resin and diaminodiphenyl sulfone as a hardener of the epoxy resin.

### PRIOR ART DOCUMENTS

### PATENT DOCUMENTS

Patent document 1: Japanese Unexamined Patent Publication (Kokai) No. 2010-229211
Patent document 2: Japanese Unexamined Patent Publication (Kokai) No. HEI 09-194611
Patent document 3: Patent Publication US 2012/058297 A1

### SUMMARY OF INVENTION

### PROBLEMS TO BE SOLVED BY THE INVENTION

The prepreg described in Patent document 1 fails to have a sufficiently reduced tackiness, and it cannot be said that the proposed automated lay-up device has a sufficiently improved processability. On the other hand, the prepreg described in Patent document 2 is too low in tackiness, resulting in insufficient adhesiveness between prepreg layers.

Thus, the problem is solved by the present invention, which aims to provide a prepreg that allows continuous laying-up of prepreg layers while preventing the reinforcing fibers or the matrix resin from being partly deposited on the automated lay-up device, when such a device is used with the aim of producing a fiber-reinforced composite material having a high toughness and impact resistance.

### MEANS OF SOLVING THE PROBLEMS

To solve the aforementioned problem, the present invention is configured as described below.
(1) A prepreg including the components [A] to [E] given below,
   meeting the requirements (i) to (iii) given below, and
   serving to produce a cured product that incorporates
   a reinforcing fiber layer defined as the region ranging from 8% to 92% depth from the surface in the thickness direction and containing a first epoxy resin composition in which 90 mass% or more of the component [A] exists, and
   two surface resin layers each defined as the region ranging from either surface to a depth of 8% exclusive in the thickness direction and containing a second epoxy resin composition in which 85 mass% or more of the component [E] exists,
      (i) the second epoxy resin composition includes the components [B] to [E] of which the component [C] accounts for 8 to 24 parts by mass relative to 100 parts by mass of the second epoxy resin composition,
      (ii) the second epoxy resin composition has a storage elastic modulus G' in the range of 1.0 × 10⁴ to 3.0 × 10⁶ Pa when measured at 25°C and an angular frequency of 3.14 rad/s, and
      (iii) plies of the prepreg laid up after being left to stand for 24 hours in an environment at a temperature of 25±2°C and a humidity of 50±5% RH show a peel strength of 0.1 N/mm or more at 35°C,
         [A] a carbon fiber,
         [B] an epoxy resin containing the components [b1] and [b2] specified below,
            [b1] a di- or less- functional epoxy resin containing, in a molecule, at least one ring structure having four- or more- membered ring and a glycidyl amine group bonded to a ring structure,
            [b2] a tri- or more- functional epoxy resin,
         [C] a thermoplastic resin having a weight-average molecular weight of 2,000 to 30,000 g/mol,
         [D] diaminodiphenyl sulfone, and
         [E] particles having a volume-average particle size of 5 to 50 µm and insoluble in the component [B],
   wherein the material of the particles of the component [E] is a thermosetting resin, thermoplastic resin, or a mixture thereof.
   According to a preferred embodiment of the prepreg of the present invention, the component [C] contained accounts for 8 to 20 parts by mass relative to 100 parts by mass of the second epoxy resin composition, and according to another preferred embodiment, the second epoxy resin composition has a storage elastic modulus G' in the range of 1.0 × 10⁵ to 1.0 × 10⁶ Pa when measured at 25°C and an angular frequency of 3.14 rad/s.
(2) a fiber reinforced composite material produced by curing the prepreg.

### ADVANTAGEOUS EFFECTS OF THE INVENTION

The use of a prepreg according to the present invention ensures good high slit tape processability and splicing property in the process of producing a fiber reinforced composite material with a high impact resistance and interlayer toughness by means of an automated lay-up device.

### BRIEF DESCRIPTION OF THE DRAWINGS

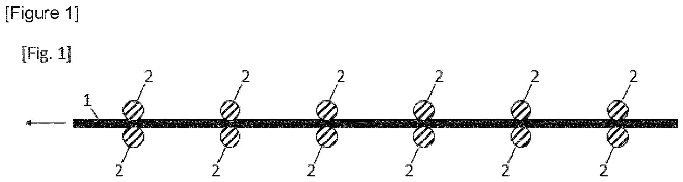

[Fig. 1] This is a schematic view showing a test for measuring the deposition of resin/fuzz on the path line that occurs as a slit prepreg is abraded.

### DESCRIPTION OF PREFERRED EMBODIMENTS

From the viewpoint of specific strength and specific elastic modulus, it is essential for the component [A] used for the present invention to be carbon fiber. Preferred types of such carbon fiber include, but not limited to, pitch carbon fiber and acrylic carbon fiber, of which acrylic carbon fiber is more preferred.

As the form of carbon fiber, twisted yarns, untwisted yarns, non-twisted yarns or the like can be used. In particular, untwisted yarns and non-twisted yarns are preferred because filaments are oriented in parallel to ensure a good balance between moldability and strength properties of resulting fiber-reinforced composite materials.

The component [B] used for the present invention is an epoxy resin that contains the components [b1] and [b2].

The component [b1] is a di- or less- functional epoxy resin containing, in a molecule, at least one ring structure having four- or more- membered ring and a glycidyl amine group bonded to a ring structure. Due to a smaller number of glycidyl groups, which are functional groups, such an epoxy resin gives a cured product with a large plastic deformation capacity because the cross-linking density is controlled moderately during curing. On the other hand, a lower cross-linking density leads to the disadvantage of a decreased elastic modulus. However, since in such an epoxy resin, the ring structures bonded to glycidyl amine groups are in a hung state like pendants in the molecule, spaces in the crosslinked structure are filled with these ring structures to decrease the free volume, making it possible to produce a cured product having the advantage of maintaining a high elastic modulus.

Epoxy resins useful as the component [b1] include N,N-diglycidyl-4-phenoxy aniline, N,N-diglycidyl-4-(4-methylphenoxy) aniline, N,N-diglycidyl-4-(4-tert-butylphenoxy) aniline, and N,N-diglycidyl-4-(4-phenoxyphenoxy) aniline.

In many cases, these epoxy resins can be produced by adding epichlorohydrin to a phenoxyaniline derivative and cyclizing it with an alkali compound. Specifically, usable phenoxyaniline derivatives include 4-phenoxyaniline, 4-(4-methylphenoxy) aniline, 4-(3-methylphenoxy) aniline, 4-(2-methylphenoxy) aniline, 4-(4-ethylphenoxy) aniline, 4-(3-ethylphenoxy) aniline, 4-(2-ethylphenoxy) aniline, 4-(4-propylphenoxy) aniline, 4-(4-tert-butylphenoxy) aniline, 4-(4-cyclohexylphenoxy) aniline, 4-(3-cyclohexylphenoxy) aniline, 4-(2-cyclohexylphenoxy) aniline, 4-(4-methoxyphenoxy) aniline, 4-(3-methoxyphenoxy) aniline, 4-(2-methoxyphenoxy) aniline, 4-(3-phenoxyphenoxy) aniline, 4-(4-phenoxyphenoxy) aniline, 4-[4-(trifluoromethyl) phenoxy] aniline, 4-[3-(trifluoromethyl) phenoxy] aniline, 4-[2-(trifluoromethyl) phenoxy] aniline, 4-(2-naphthyloxyphenoxy) aniline, 4-(1-naphthyloxyphenoxy) aniline, 4-[(1,1'-biphenyl-4-yl)oxy] aniline, 4-(4-nitrophenoxy) aniline, 4-(3-nitrophenoxy) aniline, 4-(2-nitrophenoxy) aniline, 3-nitro-4-aminophenyl phenyl ether, 2-nitro-4-(4-nitrophenoxy) aniline, 4-(2,4-dinitrophenoxy) aniline, 3-nitro-4-phenoxy aniline, 4-(2-chlorophenoxy) aniline, 4-(3-chlorophenoxy) aniline, 4-(4-chlorophenoxy) aniline, 4-(2,4-dichlorophenoxy) aniline, 3-chloro-4-(4-chlorophenoxy) aniline, and 4-(4-chloro-3-tolyloxy) aniline.

Commercial epoxy resin products useful as the component [b1] include Denacol (registered trademark) EX-731 (glycidylphthalimide, manufactured by Nagase ChemteX Corporation), OPP-G (o-phenylphenylglycidyl ether, manufactured by Sanko Co., Ltd.), GAN (N-diglycidyl aniline, manufactured by Nippon Kayaku Co., Ltd.), and TOREP (registered trademark) A-204E (diglycidyl-p-phenoxy aniline, manufactured by Toray Fine Chemicals Co., Ltd.).

The component [b2] is a tri- or more- functional epoxy resin, that is, a compound that has three or more epoxy groups in a molecule. The use of such an epoxy resin as the component [b2] serves to produce a cured product having a high glass transition temperature, high elastic modulus, etc.

Examples of the component [b2] include glycidyl amine type tri- or more- functional epoxy resins, glycidyl ether type tri- or more- functional epoxy resins, and aminophenol type tri- or more- functional epoxy resins. Of these, diaminodiphenylmethane type epoxy resins and aminophenol type tri- or more- functional epoxy resins are preferred because they have a good balance among physical properties.

Examples of glycidyl amine type tri- or more- functional epoxy resins that are preferred as the component [b2] include diaminodiphenylmethane type epoxy resins, diaminodiphenyl sulfone type epoxy resins, metaxylenediamine type epoxy resins, 1,3-bisaminomethyl cyclohexane type epoxy resins, and isocyanurate type epoxy resins. Commercial products of these epoxy resins include Araldite (registered trademark) MY720, Araldite (registered trademark) MY721, Araldite (registered trademark) MY9512, Araldite (registered trademark) MY9663 (all manufactured by Huntsman Corporation), SUMI-EPOXY (registered trademark) ELM434 (manufactured by Sumitomo Chemical Co., Ltd.), Epotohto (registered trademark) YH-434 (manufactured by NIPPON STEEL Chemical & Material Co., Ltd.), and jER (registered trademark) 604 (manufactured by Mitsubishi Chemical Corporation).

Examples of glycidyl ether type tri- or more- functional epoxy resins that are preferred as the component [b2] include such epoxy resins as phenol novolac type epoxy resins, orthocresol novolac type epoxy resins, tris-hydroxyphenylmethane type epoxy resins, and tetra-phenylol ethane type epoxy resins. Commercial products of these epoxy resins include D.E.N. (registered trademark) 431, D.E.N. (registered trademark) 438 (both manufactured by The Dow Chemical Company), jER (registered trademark) 152 (manufactured by Mitsubishi Chemical Corporation), EOCN-1020 (manufactured by Nippon Kayaku Co., Ltd.), EPICLON (registered trademark) N-660 (manufactured by DIC), Tactix (registered trademark) 742 (manufactured by Huntsman Corporation), jER (registered trademark) 1031S (manufactured by Mitsubishi Chemical Corporation), and EPICLON (registered trademark) HP-7200 (manufactured by DIC).

Examples of aminophenol type tri- or more- functional epoxy resins that are preferred as the component [b2] include triglycidylation products of p-aminophenol, m-aminophenol, p-aminocresol, trifluoromethyl hydroxyaniline, hydroxyphenyl aniline, methoxyhydroxyaniline, butylhydroxyaniline, and hydroxynaphthyl aniline. Commercial products of these epoxy resins include SUMI-EPOXY (registered trademark) ELM120, SUMI-EPOXY (registered trademark) ELM100 (both manufactured by Sumitomo Chemical Co., Ltd.), MY0500, Araldite (registered trademark) MY0510 (both manufactured by Huntsman Corporation), and jER (registered trademark) 630 (manufactured by Mitsubishi Chemical Corporation).

It is preferable for these epoxy resins used as the component [b2] to have 3 to 4 functional groups in a molecule. If the number of these functional groups is in this range, the matrix resin tends to form cured products having a sufficiently high heat resistance and elastic modulus.

Furthermore, it is preferable that the component [b1] account for 20 to 50 parts by mass while the component [b2] account for 50 to 80 parts by mass relative to the total quantity, which accounts for 100 parts by mass, of the component [B]. The resin tends to have a sufficiently high elastic modulus when the component [b1] accounts for 20 parts by mass or more relative to the total quantity, which accounts for 100 parts by mass, of the component [B], and the resin tends to have a sufficiently high glass transition temperature and elastic modulus when it accounts for 50 parts by mass or less relative to the total quantity, which accounts for 100 parts by mass, of the component [B]. Furthermore, it tends to have a sufficiently high heat resistance and good mechanical property when the component [b2] accounts for 50 parts by mass or more relative to the total quantity, which accounts for 100 parts by mass, of the component [B], and it tends to form a cured resin having a sufficiently high elongation percentage and toughness when the component [b2] accounts for 80 parts by mass or less relative to the total quantity, which accounts for 100 parts by mass, of the component [B].

For the present invention, the component [B] may contain epoxy resins other than the components [b1] and [b2] unless they impair the preferred effects of the invention. Such epoxy resins other than the components [b1] and [b2] are preferably glycidyl ether type difunctional epoxy resins produced from a phenol as precursor. Examples of these epoxy resins include so-called bisphenol type epoxy resins such as bisphenol A type epoxy resin resins, bisphenol F type epoxy resin resins, and bisphenol S type epoxy resin resins.

Commercial products of bisphenol A type epoxy resins that can be used as such epoxy resins other than the components [b1] and [b2] include jER (registered trademark) 825, jER (registered trademark) 827, jER (registered trademark) 828, jER (registered trademark) 834, jER (registered trademark) 1001, jER (registered trademark) 1004, jER (registered trademark) 1004AF, jER (registered trademark) 1007 (all manufactured by Mitsubishi Chemical Corporation), EPICLON (registered trademark) 850 (manufactured by DIC Corporation), Epotohto (registered trademark) YD-128 (manufactured by NIPPON STEEL Chemical & Materia Co., Ltd.), D.E.R. (registered trademark) 331, and D.E.R. (registered trademark) 332 (both manufactured by The Dow Chemical Company).

Commercial products of bisphenol F type epoxy resins that can be used as such epoxy resins other than the components [b1] and [b2] include jER (registered trademark) 806, jER (registered trademark) 807, jER (registered trademark) 1750 (all manufactured by Mitsubishi Chemical Corporation), EPICLON (registered trademark) 830 (manufactured by DIC), and Epotohto (registered trademark) YDF-170 (manufactured by NIPPON STEEL Chemical & Material Co., Ltd.).

Commercial products of bisphenol S type epoxy resins that can be used as such epoxy resins other than the components [b1] and [b2] include EPICLON (registered trademark) EXA-1514 (manufactured by DIC).

For the component [B], the incorporation of both an epoxy resin showing fluidity at an appropriate temperature and an epoxy resin showing no fluidity at an appropriate temperature is effective for fluidity control of the matrix resin during heat-curing of the resulting prepreg. The fluidity control of the matrix resin serves to appropriately adjust the degree of impregnation of reinforcing fibers with the matrix resin and it is also effective for producing a prepreg having desired degrees of tackiness and drapability.

The component [C] is a thermoplastic resin having a weight-average molecular weight of 2,000 to 30,000 g/mol. The weight-average molecular weight referred to herein means a weight-average molecular weight measured by gel permeation chromatography and converted in terms of polystyrene. The incorporation of the component [C], which has a weight-average molecular weight of 2,000 g/mol or more, serves to produce a cured resin with an improved toughness and a prepreg with a decreased tackiness. Furthermore, the incorporation of the component [C], which has a weight-average molecular weight of 30,000 g/mol or less, serves to prevent the matrix resin from having an excessively high viscosity and produce a prepreg having a high handleability.

The component [C] is preferably soluble in the component [B] from the viewpoint of obtaining a fiber-reinforced composite material with good mechanical properties and a matrix resin with a desired viscosity. The expression "soluble in in the component [B]" used herein means that there exists a temperature region wherein a homogeneous phase is formed when mixing the component [C] and the component [B] and subsequently heating and stirring them. Here, the expression "a homogeneous phase is formed" means that there is a state wherein phase separation is not found by visual observation. As long as a homogeneous phase can be formed in a particular temperature range, separation may occur in other temperature regions. For example, separation may occur at 23°C if a homogeneous phase is formed at 120°C. Dissolution may be confirmed by the following method. Specifically, in the case where the component [C] is obtained in a powdery form, the powder is mixed in the component [B] and the mixture is maintained for several hours, for example 2 hours, at a constant temperature that is lower than the glass transition temperature of the component [B] while measuring the changes in viscosity. It can be decided that the component [C] is soluble in the epoxy resin if the viscosity increases by 5% or more from that of the component [B] alone heated at the same constant temperature.

Furthermore, it is preferable that a thermoplastic resin containing a functional group having hydrogen bond forming property be used as the component [C] because it is expected to work effectively for strengthening the adhesion between the component [A] and the component [B]. Examples of such a functional group having hydrogen bond forming property include alcoholic hydroxyl groups, amide bonds, sulfonyl groups, and carboxyl groups.

Examples of the component [C] having an alcoholic hydroxyl group include polyvinyl acetal resins such as polyvinyl formal and polyvinyl butyral as well as polyvinyl alcohol and phenoxy resins.

Examples of the component [C] having an amide bond include polyamide, polyimide, polyamideimide, and polyvinyl pyrolidone.

Examples of the component [C] having a sulfonyl group include polysulfone and polyethersulfone.

Examples of the component [C] having a carboxyl group include polyester, polyamide, and polyamideimide. The carboxyl group may be located in the principal chain and/or at a chain end.

Of the above ones, the polyamide, polyimide, and polysulfone may contain, in their principal chains, an ether bond or a functional group such as carbonyl group. In the polyamide, the nitrogen atom in the amide group may have a substituent.

As the component [C], examples of commercial thermoplastic resin products that are soluble in the component [B] and contain a functional group having hydrogen bond forming property include the following. Commercial polyvinyl acetal resin products include Mowital (registered trademark) (manufactured by Kuraray Co., Ltd.) and vinylec (registered trademark) K (manufactured by JNC); polyvinyl alcohol resin products include Denka Poval (registered trademark) (manufactured by Denka Company Limited); polyamide resin products include Macromelt (registered trademark) (manufactured by Henkel) and Amilan (registered trademark) CM4000 (manufactured by Toray Industries, Inc.); polyimide products include Ultem (registered trademark) (manufactured by SABIC), Aurum (registered trademark) (manufactured by Mitsui Chemicals, Inc.), and Vespel (registered trademark) (manufactured by Du Pont); PEEK polymer products include Victrex (registered trademark) (manufactured by Victrex); polysulfone products include UDEL (registered trademark) (manufactured by Solvay Specialties Polymers); and polyvinyl pyrrolidone products include Luviskol (registered trademark) (manufactured by BASF).

As the component [C], examples of other preferred thermoplastic resins that are soluble in the component [B] include those thermoplastic resins having polyaryl ether backbones. The use of such a thermoplastic resin having a polyaryl ether backbone serves to control the tackiness of the resulting prepreg, control the fluidity of the matrix resin during heat-curing of the prepreg, and provide a tough fiber reinforced composite material without impairing the heat resistance or elastic modulus.

Examples of such a thermoplastic resin having a polyaryl ether backbone and serving favorably as the component [C] include polysulfone, polyphenyl sulfone, polyethersulfone, polyetherimide, polyphenylene ether, polyether ether ketone, and polyether ether sulfone, and these thermoplastic resins having polyaryl ether backbones may be used singly or as a combination of two or more thereof. To ensure a high heat resistance, in particular, the thermoplastic resin having a polyaryl ether backbone preferably has a glass transition temperature (Tg) of at least 150°C or more, more preferably 170°C or more. If the glass transition temperature of the thermoplastic resin having a polyaryl ether skeleton is more than 150°C, moldings produced therefrom tend to be resistant to thermal deformation.

The terminal functional group in the thermoplastic resin having a polyaryl ether backbone is preferably a hydroxyl group, carboxyl group, thiol group, anhydride, etc. because they can react with a cation-polymerizable compound. Commercial products of thermoplastic resin having such a terminal functional group, having a polyaryl ether backbone, and having a weight-average molecular weight of 2,000 to 30,000 g/mol include Sumika Excel (registered trademark) PES3600P (manufactured by Sumitomo Chemical Co., Ltd.) and Virantage (registered trademark) VW-10700RFP (manufactured by Solvay Specialties Polymers) as well as copolymer oligomers of polyethersulfone and polyether ether sulfone as described in Published Japanese Translation of PCT International Publication JP 2004-506789. They also include Ultem (registered trademark) 1040 (manufactured by SABIC), which is a commercial product of polyetherimide. An oligomer as referred to herein is a polymer composed mainly of a finite number, commonly 10 to 100, of monomers bonded to each other. In particular, the use of polysulfone or polyether sulfone is preferable from the viewpoint of the solubility in the components [B], heat resistance, solvent resistance, and toughness improvement.

The component [D] is diaminodiphenyl sulfone. The component [D] is a curing agent for the component [B] and it is a compound having an active hydrogen that can react with an epoxy group. Isomers of diaminodiphenyl sulfone include 3,3'-diaminodiphenyl sulfone and 4,4'-diaminodiphenyl sulfone, of which 4,4'-diaminodiphenyl sulfone is preferred from the viewpoint of storage stability.

Commercial products of diaminodiphenyl sulfone include SEIKACURE S (manufactured by Wakayama Seika Kogyo Co., Ltd.), MDA-220 (manufactured by Mitsui Chemicals, Inc.), and 3,3'-DAS (manufactured by Mitsui Chemicals, Inc.).

Here, it is desirable for the total quantity of diaminodiphenyl sulfone of the component [D] to be such that the number of moles of active hydrogen contained in the molecule is 1.05 to 2.0 times, preferably 1.1 to 1.8 times, and still preferably 1.2 to 1.5 times, as large as the number of moles of epoxy groups contained in the entire second epoxy resin composition. If the number of moles of active hydrogen is only less than 1.05 times as large as the number of moles of epoxy groups contained in the entire second epoxy resin composition, the resulting cured product can be high in cross-linking density, possibly leading to a resin with a decreased elongation percentage. If it is more than 2.0 times, on the other hand, the heat resistance tends to decrease significantly while the viscosity of the the second epoxy resin composition tends to increase, possibly making prepreg preparation difficult.

Only one type of diaminodiphenyl sulfone or a combination of a plurality of types thereof may be used as the component [D].

In addition, a curing agent other than diaminodiphenyl sulfone may be used in combination unless good effects of the present invention are impaired. Examples of such a curing agent other than diaminodiphenyl sulfone include diaminodiphenyl ether, diaminobenzophenone, dicyandiamide, aminobenzoic acid esters, various anhydrides, phenol novolac resins, cresol novolac resins, polyphenol compounds, imidazole derivatives, aliphatic amines, tetramethylguanidine, thiourea-added amines, methyl hexahydrophthalic anhydride, other similar carboxylic anhydrides, carboxylic acid hydrazide, carboxylic acid amide, polymercaptan, boron trifluoride ethylamine complex, and other similar Lewis acid complexes. Part of the component [B] and the component [D] may be reacted preliminarily before adding them to prepare a composition. In some cases, this method can serve effectively for viscosity adjustment and storage stability improvement in preparing an epoxy resin composition.

The addition of a curing accelerator may also be effective for promoting the reaction between the epoxy resin and the curing agent. Examples of such a curing accelerator include urea compounds, tertiary amines and salts thereof, imidazole and salts thereof, triphenyl phosphine and derivatives thereof, metal carboxylates, Lewis acids, Broensted acids, and salts thereof. Of these, the use of a urea compound is preferred from the viewpoint of the balance between its storage stability and catalytic ability. In particular, the combination of a urea compound and a dicyandiamide of diaminodiphenyl sulfone is preferred.

The component [E] used for the present invention is particles that have a volume-average particle size of 5 to 50 µm and are insoluble in the component [B]. Here, to determine the volume-average particle size, particles accounting for a mass concentration of 9% are dispersed in a dispersion medium and the volume-average diameter is calculated from measurements taken by laser diffraction/scattering particle size distribution measuring equipment (preferably LA-750, manufactured by HORIBA, Ltd.). Two measurements were taken and their average was adopted. Here, the expression "being insoluble in the component [B]" means that when an epoxy resin composition prepared by dispersing particles of the component [E] in a composition containing the components [B], [C], and [D] is heat-cured, the particles of the component [E] substantially do not dissolve in the component [B] and that in observations made by, for instance, transmission electron microscopy, the thermoplastic particles of the component [E] in the cured epoxy resin do not undergo substantial shrinkage from their original size with clearly defined interfaces maintained between the thermoplastic particles of the component [E] and the matrix resin. In this instance, the components of the second epoxy resin composition described later in Example 1 can be used as components of the epoxy resin composition other than the particles of the component [E]. However, other components may also be used unless dissolution characteristics are changed.

The volume-average particle size of the particles of the component [E] is 5 to 50 µm, preferably 7 to 40 µm, and more preferably 10 to 30 µm. The range may be between any of the aforementioned upper limits and any of the aforementioned lower limits. A volume-average particle size controlled at 5 µm or more serves to prevent the component [E] contained in the second epoxy resin composition existing in the surface resin layer of the prepreg according to the present invention described later from getting into the bundles of the carbon fibers of the component [A] and allow them to stay in the interlayer resin layer in the resulting fiber reinforced composite material, whereas a volume-average particle size controlled at 50 µm or less serves to form a surface resin layer of the matrix resin with an appropriate thickness on the prepreg surface and, in addition, ensure that a fiber reinforced composite material having a good open mode (mode 1) interlayer fracture toughness (G_{lc}) is obtained and that the carbon fiber of the component [A] has an appropriate volume content.

The material of the particles of the component [E] is a thermosetting resin, thermoplastic resin, or a mixture thereof, of which the use of a thermoplastic resin as primary component is desirable from the viewpoint of providing a fiber reinforced composite material with a high impact resistance. Here, particles that incorporate, as primary component, a thermoplastic resin as referred to herein mean those particles in which the thermoplastic resin accounts for the largest proportion by mass and they may be thermoplastic resin particles formed only of the thermoplastic resin.

Examples of the thermoplastic resin of the component [E] include polyamide, polyamideimide, polyetheretherketone, polyetherketoneketone, polyester, polypropylene, and polyphenylenesulfide, of which polyamide is particularly preferable as particle material because it serves to produce a fiber reinforced composite material with a high impact resistance. Of the various polyamide particle materials, furthermore, polyamide 12, polyamide 6, polyamide 11, polyamide 66, and polyamide 6/12 copolymer are preferable. In addition, it is preferable for the particles containing a thermoplastic resin as primary component to be, for example, a polyamide polymer modified with an epoxy compound into a semi-IPN structure because such a polymer can realize a desirable strength of adhesion to an epoxy resin composition. Here, IPN stands for interpenetrating polymer network, which is a kind of polymer blend structure. Specifically, crosslinked polymers are used as blend components and the dissimilar crosslinked polymers are partially or fully entangled to form a multiple network structure. A semi-IPN has a multiple network formed of crosslinked and straight-chain polymers. Semi-IPN thermoplastic resin particles can be produced by, for example, dissolving a thermoplastic resin and a thermosetting resin in a common solvent, mixing them uniformly, and performing reprecipitation. The use of particles of an epoxy resin and a semi-IPN polyamide serves to produce a prepreg having a high heat resistance and high impact resistance.

Useful commercial products of such polyamide particles include SP-500, SP-10, TR-1, TR-2, Toraypearl (registered trademark) TN, (all manufactured by Toray Industries, Inc.), Orgasol (registered trademark) 1002D, Orgasol (registered trademark) 2001UD, Orgasol (registered trademark) 2001EXD, Orgasol (registered trademark) 2002D, Orgasol (registered trademark) 3202D, Orgasol (registered trademark) 3501D, and Orgasol (registered trademark) 3502D (all manufactured by Arkema).

In regard to the shape of such thermoplastic resin particles, they may be spherical, nonspherical, porous, needle-like, whisker-like, flaky, or porous, of which spherical particles are preferable because spherical particles do not work to deteriorate the epoxy resin's flow property and can maintain high carbon fiber impregnating property, and the degree of delamination caused by local impact is further reduced in drop impact (or local impact) test of fiber reinforced composite material so that, in the case where a stress is applied to the fiber reinforced composite material after undergoing the impact test, there will be a decreased number of delamination parts that result from the local impact to act as starting points of destruction attributed to stress concentration, thereby making it possible to obtain a fiber reinforced composite material having a high impact resistance.

Furthermore, the component [E] is not dissolved in the matrix resin during the curing step and therefore can exhibit a better modification effect. The feature that they are not dissolved during the curing step is also effective for maintaining fluidity of the resin during the curing step and improving the impregnating property.
In a cured product produced from the prepreg according to the present invention, the reinforcing fiber layer defined as the region ranging from 8% to 92% depth from the surface in the thickness direction contains a first epoxy resin composition in which 90 mass% or more of the component [A] exists, and the two surface resin layers each defined as the region ranging from either surface to a depth of 8% exclusive in the thickness direction contain a second epoxy resin composition in which 85 mass% or more of the component [E] exists. Here, the feature of the prepreg is specified in terms of the "cured product produced therefrom". The reason for this is as described below. When a cured product is produced from the prepreg according to the present invention, there are two surface resin layers each defined as the region ranging from either surface to a depth of 8% exclusive measured in the thickness direction and a reinforcing fiber layer defined as the region ranging from 8% to 92% depth from the surface measured in the thickness direction. Here, the expression "when a cured product is produced" is refers to the fact that observation is performed after curing a prepreg specimen by gradual heating from room temperature to cause slow reaction because it is difficult to observe a cross section of a prepreg when it is in the uncured state. The reinforcing fiber layer contains the first epoxy resin composition while the surface resin layer contains the second epoxy resin composition. It is essential that the second epoxy resin composition contains the components [B] to [E], with the component [C] accounting for 8 to 20 parts by mass relative to the total quantity thereof, which accounts for 100 parts by mass. If the content is in this range, the value of G' at room temperature can be improved and the prepreg surface can be adjusted to an appropriate tackiness. Furthermore, the time period in which a desirable tackiness is maintained (which is occasionally referred to as tack life) can be prolonged. In the case of the first epoxy resin composition, as long as it contains epoxy resins, there are no limitations on the chemical structures of the epoxy resins existing in the composition and it is not necessary to contain the component [E] as in the case of the second epoxy resin composition.

The prepreg according to the present invention is a combination of an epoxy resin composition and carbon fibers. The prepreg according to the present invention is preferably produced by the hot-melt process to ensure the development of the advantageous effect of the invention. The hot-melt process is a solvent-free technique designed for the impregnation of carbon fibers with an epoxy resin composition that is heated to decrease its viscosity. The hot-melt process can be carried out by some different procedures including a procedure in which a matrix resin heated to decrease the viscosity is used for direct impregnation of carbon fibers and a procedure in which release paper sheets laid with resin film are prepared by coating release paper sheets etc. with a matrix resin and then used to cover either or both surfaces of a carbon fiber sheet, followed by applying heat and pressure to ensure the impregnation of the carbon fiber sheet with the matrix resin. The above procedures are generally intended to provide sheet-like prepregs, but a carbon fiber strand may be directly immersed in an epoxy resin composition having a decreased viscosity to provide tape-like or thread-like prepregs.

In the prepreg according to the present invention, 90 mass% or more of the component [A] exists in the reinforcing fiber layer. Furthermore, as described above, the first epoxy resin composition may or may not contain the component [E], but it is necessary that 85 mass% or more of the component [E] exist in the surface resin layers. If this structure is realized, an interlayer resin layer with increased toughness can be formed between the reinforcing fiber layers in the resulting fiber reinforced composite material.

A cross section of the prepreg according to the present invention can be observed by, for example, the method described below. Specifically, a prepreg is interposed between two polytetrafluoroethylene resin plates having smooth surfaces and brought into strong contact with them, and then the temperature is increased gradually so as to reach the curing temperature in seven days to ensure gelation and curing, thus producing a cured prepreg plate. This cured prepreg plate is observed at a magnification of 200 or more under, for example, a digital microscope VHX-5000 (manufactured by Keyence Corporation).

The proportion of the component [E] that exists can be determined by, for example, the method described below. In a cross-sectional photograph obtained from cross-sectional observation of a prepreg, its proportion is calculated from the total area occupied by the component [E] in the entire prepreg and the area occupied by the component [E] in a particular region. Here, the total area occupied by the component [E] can be determined by taking a cross-sectional photograph and cutting out the portions of the component [E] using a generally known image analysis method. In the case where it is difficult to distinguish the component [E] dispersed in the resin in the photograph, the method of staining the component [E] can be adopted.

As a good method to localize the component [E] in the surface resin layer, there is a two stage impregnation process that consists of preparing a resin film-coated release paper sheet (hereinafter occasionally referred to simply as resin film) composed of a piece of release paper etc. coated with an epoxy resin composition of the components [B] to [D], applying such a resin film-coated release paper sheet to either or both surfaces of a carbon fiber sheet with the resin film facing the carbon fiber sheet, heating and pressing them to impregnate the carbon fiber with the epoxy resin composition to provide a primary prepreg, and then applying a resin film produced from the second epoxy resin composition composed of the components [B] to [E] to each surface of the primary prepreg by the same procedure as for the above primary prepreg preparation, followed by an impregnation step as required, to provide a prepreg. Here, the primary prepreg may be wound up once and then unwound while applying a resin film of the second epoxy resin composition or impregnating the prepreg with it, or the preparation of a primary prepreg by impregnating the carbon fiber with the first epoxy resin composition may be immediately followed by applying a resin film of the second epoxy resin composition or impregnating the prepreg with it.

For the epoxy resin composition (I) containing the components [B] to [E] in the surface resin layer, it is necessary that the component [C] accounts for 8 to 24 parts by mass relative to 100 parts by mass of the epoxy resin composition (I). If the component [C] accounts for 8 to 24 parts by mass, it serves to prevent the resin from singing in the reinforcing fiber layer, allow the resulting prepreg to have a surface with a long tack life, and realize the production of a material with high toughness.

Furthermore, the second epoxy resin composition has a storage elastic modulus G' at 25°C is in the range of 1.0 × 10⁴ to 3.0 × 10⁶ Pa, preferably 1.0 × 10⁵ to 1.0 × 10⁶ Pa. If the storage elastic modulus G' is in this range, it serves to sufficiently prevent the epoxy resin composition contained in the slit tape prepreg from adhering to the guide roll during the implementation of the automated lay-up method.

The storage elastic modulus G' at 25°C referred to herein is determined by taking measurements using a dynamic viscoelasticity measuring apparatus (for example ARES, manufactured by TA Instruments) equipped with parallel plates, which is operated in the auto-strain mode under the conditions of a measurement onset temperature of 10°C, a parallel plate diameter of 8 mm, a parallel plate gap of 1 mm, an angular frequency of 3.14 rad/s, and a temperature ramp rate of 1.7°C/min to give a G' curve, from which the G' value at 25°C is read. It is noted that the value of G' read at any temperature on the G' curve is referred to as G' at that temperature.

Here, measurements of the G' of a second epoxy resin composition are valid only when the components [B] to [E] contained therein have definite structures and account for definite proportions.

Furthermore, it is necessary that plies of the prepreg according to the present invention that are laid up after being left to stand for 24 hours at room temperature show a peel strength of 0.1 N/mm or more at 35°C. If this is realized, a sufficient adhesiveness can be achieved in the splicing step in which prepreg plies are pasted together. Here, room temperature represents an environment in which the temperature is 25±2°C and the humidity is 50±5% RH.

From the viewpoint of the processability in the resin film preparation step, it is preferable for the second epoxy resin composition to have a viscosity at 85°C of 10 to 300 Pa•s. It is more preferably 20 to 200 Pa•s and still more preferably 30 to 100 Pa•s. The range may be between any of the aforementioned upper limits and any of the aforementioned lower limits. If the viscosity at 85°C is 10 Pa•s or more, it tends to serve sufficiently to prevent the resin from flowing out when a tack of resin film-coated release paper sheets is pressed to from a prepreg. If the viscosity at 85°C is 300 Pa•s or less, it tends to serve for the production of a film with a uniform thickness while ensuring good impregnating property in impregnating the reinforcing fibers.

The viscosity at 25°C or 85°C as referred to herein is determined by taking measurements using a dynamic viscoelasticity measuring apparatus (for example ARES, manufactured by TA Instruments) equipped with parallel plates, which is operated in the auto-strain mode under the conditions of a measurement onset temperature of 20°C, a parallel plate diameter of 40 mm, a parallel plate gap of 1 mm, an angular frequency of 3.14 rad/s, and a temperature ramp rate of 1.7°C/min to give a temperature-viscosity curve, from which the viscosity at 25°C or 85°C is read.

Alternatively, the prepreg according to the present invention may be produced in a single stage impregnation step, instead of the two stage impregnation step described above. For example, resin films of the second epoxy resin are prepared first, and then these resin films are applied to either or both surfaces of a carbon fiber sheet, followed by heating and pressing them to allow the carbon fibers to be impregnated selectively with the components [B] to [D] contained in the second epoxy resin composition, thereby providing a prepreg in which the first epoxy resin composition is contained in the reinforcing fiber layer while the second epoxy resin composition is contained in the surface resin layer. In this instance, since the component [E] has a volume-average particle size in the range of 5 to 50 µm, the component [E] is prevented from getting into the bundles of carbon fibers of the component [A], thus providing a prepreg having a reinforcing fiber layer composed of the component [A] and the first epoxy resin composition, which contains the components [B] to [D], but is substantially free of the component [E], and two surface resin layers formed of the second epoxy resin composition, which contains the components [B] to [E], wherein the former layer is interposed between the latter layers.

For the prepreg according to the present invention, the carbon fiber areal weight is preferably 100 to 1,000 g/ m². If the carbon fiber areal weight is 100 g/ m² or more, it tends to serve to reduce the number of plies to be stacked to realize a required thickness when molding a fiber reinforced composite material. In addition, if the carbon fiber areal weight is 1,000 g/ m² or less, it tends to serve to obtain a fiber reinforced composite material having a high drapability. The fiber content by mass is preferably 40 to 90 mass%, and more preferably 50 to 80 mass%. The range may be between any of the aforementioned upper limits and any of the aforementioned lower limits. It it is in this range, void generation in the moldings tends to be depressed to allow the carbon fiber to show its good mechanical properties.

Regarding the structure of the prepreg according to the present invention, it may be either a one directional fiber prepreg or a woven fabric prepreg.

The prepreg according to the present invention can be processed into tapes or threads by dividing it to a required width by a generally known method. Such tape-like or thread-like prepreg plies can be laid up suitably by using an automated lay-up device.

Cutting of a prepreg can be achieved by using a generally known cutter. Examples thereof include cemented carbide blade cutter, ultrasonic cutter, and round blade cutter.

The fiber reinforced composite material according to the present invention can be produced by laying up plies of the prepreg according to the present invention in an appropriate form and heating them to cure the resin. It is preferable to press them during the molding step from the viewpoint of depressing the formation of voids and obtaining a uniformly cured product. Here, the application of heat and pressure can be carried out by using a generally known method such as autoclave molding method, press molding method, bag molding method, wrapping tape method, and internal pressure molding method.

Fiber reinforced composite materials produced by the above molding methods preferably have glass transition temperatures in the range of 100°C to 250°C from the viewpoint of processability of the molded materials in post-treatment steps. In the case of aircraft members, in particular, the glass transition temperature is preferably in the range of 170°C to 250°C in order to permit their application to members for use at high temperatures.

### EXAMPLES

The present invention will now be illustrated in detail with reference to examples, but it should be understood that the invention is not construed as being limited thereto. Preparation and evaluation of prepreg samples in these examples were performed in an atmosphere maintained at a temperature at 23°C ± 2°C and a relative humidity of 50% unless otherwise specified.

### Component [A] <carbon fiber>

- Torayca (registered trademark) T800G-24K (carbon fiber having 24,000 filaments, tensile strength of 5.9 GPa, tensile modulus of 294 GPa, and tensile elongation of 2.0%, manufactured by Toray Industries, Inc.)

### Component [B] <epoxy resin>

[b1] < di- or less- functional epoxy resin containing, in a molecule, at least one ring structure having four- or more membered ring and also containing a glycidyl amine group bonded to a ring structure>
   - TOREP (registered trademark) A-204E (diglycidyl-N-phenoxy aniline, manufactured by Toray Fine Chemicals Co., Ltd.)
   - GAN (N-diglycidyl aniline, manufactured by Nippon Kayaku Co., Ltd.)
[b2] < tri- or more- functional epoxy resin >
   - jER (registered trademark) 630 (triglycidyl-p-aminophenol, manufactured by Mitsubishi Chemical Corporation, epoxy equivalent weight 98 g/eq)
   - Araldite (registered trademark) MY721 (tetraglycidyl diaminodiphenylmethane, manufactured by Huntsman Corporation, epoxy equivalent weight 112.5 g/eq)

### Component [C] <thermoplastic resin>

- Virantage (registered trademark) 10700 (polyethersulfone, manufactured by Solvay Specialties Polymers, weight-average molecular weight 21,000 g/mol)
- Sumika Excel (registered trademark) PES5003P (polyethersulfone, manufactured by Sumitomo Chemical Co., Ltd., weight-average molecular weight 47,000 g/mol)

### Component(D) <curing agent>

- SEIKACURE-S (4,4'-diaminodiphenyl sulfone, manufactured by SEIKA Corporation)
- 3,3'-DAS (3,3'-diaminodiphenyl sulfone, manufactured by Mitsui Chemicals, Inc.) Component [E] <particles insoluble in epoxy resin and containing thermoplastic resin as primary component>
- Toraypearl (registered trademark) TN (polyamide particles, manufactured by Toray Industries, Inc., average particle size 13 µm)
- Orgasol (registered trademark) 1002D (polyamide particles, manufactured by Arkema, average particle size 21 µm)

### (1) Measurement of average particle size of the component [E]

To determine the average particle size of the component [E], particles accounting for a weight concentration of 9% are dispersed in a dispersion medium and the volume-average diameter is calculated from measurements taken by laser diffraction/scattering particle size distribution measuring equipment (LA-750, manufactured by HORIBA, Ltd.). Two measurements were taken from a specimen and their average was adopted.

### (2) Preparation of epoxy resin composition

In a kneader, epoxy resins of the components [b1] an [b2] and a thermoplastic resin of the component [C] were added according to the lists of components and proportions given in Tables 1 to 2 and heated up to 160°C while kneading, followed by stirring for 1 hour to ensure that the component [C] is dissolved to provide a transparent viscous liquid. This liquid was allowed to cool to 70°C while kneading and then a curing agent of the component (D) was added, followed by additional kneading to provide a first epoxy resin composition.

Then, the component [C] was dissolved in the components [b1] and [b2] and cooled to 70°C to prepare a viscous liquid and the component [E] was add thereto, followed by adding the component [D] to provide a second epoxy resin composition (epoxy resin composition (I)) that contains the component [E].

### (3) Evaluation of storage elastic modulus G' of epoxy resin composition

The second epoxy resin composition was set in a dynamic viscoelasticity measuring apparatus (ARES-G2, manufactured by TA Instruments) equipped with flat parallel plates with a diameter of 8 mm as upper and lower measuring jig members in such a manner that the epoxy resin composition specimen was interposed between the upper and lower jig members spaced by a distance of 0.5 mm, and measurements were taken in the torsion mode (measuring frequency 1.6 Hz) over a measuring temperature range of 10°C to 60°C while increasing the temperature at a rate of 1.5°C/min from 10°C to 60°C.

### (4) Preparation of prepreg

In the following examples, prepreg samples were prepared as described below. Silicone was spread uniformly over sheets of release paper and the first epoxy resin composition or the second epoxy resin composition (epoxy resin composition (I)) prepared in the above paragraph (2) to prepare first resin films and second resin films. A layer of carbon fibers arranged uniformly (T800G-24K, manufactured by Toray Industries, Inc.) was sandwiched between two first resin films and heated under pressure using a press roll to provide a primary prepreg containing a carbon fiber layer impregnated with the first epoxy resin composition (carbon fiber areal weight 145 g/cm², resin content 23.6 mass%). Subsequently, both release paper sheets were peeled off. Then, the primary prepreg was sandwiched between two second resin films and heated under pressure using a press roll to provide a prepreg impregnated with both the first epoxy resin composition and the second epoxy resin composition (carbon fiber areal weight 145 g/m², resin content 34.0 mass%). Subsequently, one of the release paper sheets was peeled off. At this point, the resulting prepreg had only one surface covered with release paper.

### (5) Evaluation of average thickness of prepreg

The prepreg sample prepared in each example and comparative example was sandwiched between two polytetrafluoroethylene resin plates with smooth surfaces and brought into close contact, and then the temperature was increased gradually over 7 days up to 150°C, thereby curing the resin to produce a plate-like cured product. The resulting plate-like cured product was cut in such a manner that a cross section of the carbon fiber of the component [A] was exposed, and then the exposed cross section was polished. The polished cross section was photographed at a magnification of 200 or more under a digital microscope (VHX-5000, manufactured by Keyence Corporation) in such a manner that the top and bottom faces of the prepreg were included the field of view. In the cross-sectional photograph, the thicknesses of the surface resin layer and the reinforcing fiber layer were measured at five points and the sum of the average surface resin layer thickness and the average reinforcing fiber layer thickness was adopted as the average thickness of the prepreg.

### (6) Evaluation for the proportions of the component [A] and the component [E] existing in the prepreg's surface resin layer ranging from each surface of the prepreg

In the photograph of a cured product used to determine the average prepreg thickness by the procedure described in the paragraph (5), a line that passes the through-thickness center of the reinforcing fiber layer and is substantially parallel to the boundaries between the reinforcing fiber layer and the surface resin layers is drawn first, followed by drawing two lines that are parallel to the above center line, each spaced in the thickness direction away from the center line by 42% of the average prepreg thickness determined by the procedure described in the paragraph (5). In this way, the region ranging over 42% of the total depth from the center line of the reinforcing fiber layer toward each surface, i.e., the region of the reinforcing fiber layer, is identified. Then, the total area occupied by the component [A] existing in this region and the total area occupied by the component [A] existing across the entire prepreg thickness were determined and the proportion of the component [A] existing in the reinforcing fiber layer was calculated. According to the same procedure, the total area occupied the component [E] existing in the surface resin layer, i.e., the region other than the reinforcing fiber layer, and the total area occupied by the component [E] existing across the entire prepreg thickness were determined and the proportion of the component [E] existing in the surface resin layer to that existing across the entire prepreg thickness was calculated.

### (7) Evaluation of peel strength of prepreg

The prepreg samples prepared in each example and comparative example, with one surface covered with release paper, were cut in such a manner that the direction of the reinforcing fibers coincided with the length direction of each prepreg sample, to provide test samples with a size of 50 mm × 200 mm or 50 mm × 150 mm.

A prepreg sample with a size of 50 mm × 150 mm was fixed to a stainless steel plate with a size of 50 mm × 150 mm × 1.5 mm thickness using double-sided tape. In this instance, fixation was performed in such a manner that the prepreg surface not covered with release paper was in contact with the double sided tape. Then, the release paper was removed, with the 10 mm end portion measured in the length direction of the prepreg sample left covered with the release paper, to prepare a lower side measurement sample.

Then, a prepreg sample with a size of 50 mm × 200 mm was put on the lower side measurement sample in such a manner that it was held with the release paper-covered side up, that it was aligned with the release paper-free end of the lower side measurement sample, and that the direction of the reinforcing fibers in each prepreg sample were parallel to the length direction.

In addition, the two prepreg samples were left to stand for 5 minutes in a chamber maintained at a humidity of 25% RH and a temperature 35°C and, while keeping them in the chamber, pasted together under a load of 100 N applied by using a stainless steel press roll having a diameter of 30 mm and a width of 75 mm moved at a speed of 500 mm/min to prepare a measurement sample.

The peel strength of the prepreg was measured by 90° peeling test according to JIS Z 0237 (2009) "Test method for pressure sensitive adhesive tapes and pressure sensitive adhesive sheets". For each measurement sample prepared above, the end portion of a prepreg squeezed out of the stainless steel plate was fixed to a digital force gauge (ZTA-500N, manufactured by Imada Co., Ltd.) and the sample was left to stand for 5 minutes in a chamber (SH-642, manufactured by Espec Corp.) maintained at a humidity of 25% RH and a temperature 35°C. Subsequently, while in the chamber, the digital force gauge was pulled up at an angle of 90° to the stainless steel plate at a speed of 150 mm/min using a linear slider (manufactured by Oriental Motor Co., Ltd.) to separate the prepreg plies from each other. The measurements taken from the first 25 mm long portion after the start of separation were omitted and the measurements taken from the next 30 mm long portion were averaged, followed by dividing the average by 50 mm to calculate the peel strength (unit: N/mm) at 35°C. Here, it is noted that each prepreg cut to the specified size was left to stand for 24 hours at room temperature (in an environment maintained at a temperature of a 25±2°C and a humidity of 50±5% RH), with the surface carrying a polyethylene film pasted thereon, prior to use.

### (8) Measurement of deposition of resin/ fuzz on path line (evaluation of slit tape processability)

A prepreg sample was passed at a constant speed through a path narrower than the width of the prepreg sample so that both edges of the prepreg sample were abraded, while the amount of resin/fuzz coming off from the prepreg was measured to simulate the adherence of resin to an automated lay-up device, thereby evaluating the prepreg processability of the automated lay-up method.

This evaluation employed a bobbin stand to supply a prepreg, guide rolls to allow the prepreg to travel through a predetermined route, cylindrical stainless steel blocks with a diameter of 20 mm to form a path narrower than the width of the prepreg, and a wind-up machine to take up the prepreg.

As illustrated in Fig. 1, pairs of stainless steel blocks with a gap of 6.1 mm between the paired blocks were placed at six positions spaced at intervals of 100 mm in the prepreg's traveling direction, and the prepreg prepared in each example and comparative example was slit to a width of 6.35 mm and caused to travel over a distance of 1,000 m at a speed of 10 m/min. The weight of material that adhered to the block surfaces during the traveling of the prepreg was measured using an electronic balance.

Based on the results obtained, a sample was rated as A to D according to the following four stage criterion. It was rated as A when the weight was 250 mg or more, B when it was less than 275 mg, C when it was 275 mg or more and less than 300 mg, or D when it was 300 mg or more.

### (9) Measurement of deposition of resin/fuzz on cutter blades (evaluation of slit tape processability)

A prepreg was cut continuously and the amount of adhered resin/fuzz on the cutter blade was measured to simulate the adherence of resin to an automated lay-up device, thereby evaluating the prepreg processability of the automated lay-up method.

A prepreg prepared in each example and comparative example and slit to a width of 6.35 mm was cut 500 times continuously using the same position of a shear-cut type slitter made of an alloy (SKD11), which consisted mainly of a movable blade moving back and forth and a fixed blade. The weights of the movable blade and fixed blade were measured on an electronic balance before and after the cutting test run and the weight of the resin/fuzz adhered to the cutter blades was calculated from the difference in weight of the blades between before and after the cutting test run.

Based on the results obtained, a sample was rated as A to D according to the following four stage criterion. It was rated as A when the weight was less than 3.5 mg, B when it was 3.5 mg or more and less than 7 mg, C when it was 7 mg or more and less than 10.5 mg, or D when it was 10.5 mg or more.

### (10) Evaluation of spliceability

A prepreg prepared in each example and comparative example was cut to provide two sheets each measuring 800 mm in the reinforcing fiber direction and 152.4 mm in the direction perpendicular to the reinforcing fibers and these prepreg test pieces were laid up one on the other in such a manner that the reinforcing fibers in them were aligned in parallel and that they overlapped by 40.0±10.0 mm. Then, a load of 550 kg was applied to the overlap portion at 27°C so that they are integrated under the pressure. The integrated prepreg test piece was cut to provide a prepreg tape having a width of 3.2 mm in the direction perpendicular to the reinforcing fibers. A 2.5 kg weight was fixed to one end of the prepreg tape, and the tape carrying the weight was put over a roll with a diameter of 25.4 mm. Then, the spliced portion was moved back and forth 10 times on the roll, and the test piece was rated to be acceptable when it was free of rupture after the 10 back-and-forth motions.

### (11) Measuring method for open mode (mode 1) interlayer fracture toughness (G_{lc}) of fiber reinforced composite material

First, 12 plies of the prepreg prepared in each example and comparative example were laid up with the carbon fibers contained in them aligned in the same direction, and a film ply which was PTFE film with a thickness of 0.015 mm folded in half was placed between the 6th ply and the 7th ply to work to cause initial cracking. The laid-up prepreg plies were wrapped with a nylon film without leaving gaps, heated in an autoclave up to 180°C at a temperature ramp rate of 1.5°C/min, and cured by heating and pressing for 2 hours at a temperature of 180°C under a pressure of 700 kPa. A piece having a width of 25 mm and a length of 250 mm, wherein the carbon fiber direction (0°) is defined as the length direction, was cut out and a block (with a length of 25 mm, made of aluminum) designed to apply a pin load was adhered to an end (the end of the film-containing half) of the test piece according to JIS K 7086 (1993). A white paint was spread over both surfaces of the test piece to ensure clear observation of the process of cracking, and test was carried out using an Instron type universal tester (manufactured by Instron Corporation) according to Appendix 1 of JIS K 7086 (1993). The crosshead speed was 0.5 mm/min before the length of cracking reached 20 mm and increased to 1 mm/min after it reached 20 mm. The open mode (mode 1) interlayer fracture toughness (G_{lc}) was calculated from the load, displacement, and size of cracking according to JIS K 7086 (1993). Measurements were taken from 5 test pieces and their average was adopted to represent their G_{lc}.

### (12) Measurement of compression strength after impact (CAI) of fiber reinforced composite material

Stacks of plies of the prepreg prepared in each example and comparative example were prepared. Each stack had a structure of [+45°/0°/-45°/90°] where 0° means the length direction of the carbon fibers in the prepreg. Three such stacks, containing a total of 12 plies, were piled up to form a preliminary laminate and then such laminates were laid up symmetrically to form a quasi-isotropic preliminary laminate containing a total of 24 plies. The resulting quasi-isotropy preliminary laminate was placed in an autoclave, and under a pressure of 0.6 MPa, it was heated from room temperature to a temperature of 180°C at a rate of 1.7°C per minute and cured for 2 hours at a temperature of 180°C to provide a fiber reinforced composite material. From the resulting fiber reinforced composite material, a rectangular test piece with a length of 150 mm and a width of 100 mm was cut out, and a drop impact of 6.7 J per mm thickness of the test piece was applied to the center of the test piece according to JIS K 7089 (1996), followed by measuring the residual compressive strength according to JIS K 7089 (1996). Six measurements were taken and their average was adopted to represent the compression strength after impact (CAI) (MPa).

### <Example 1>

A first epoxy resin composition and a second epoxy resin composition were prepared from the components specified in the column under Example 1 in Table 1. The number of moles of active hydrogen in the second epoxy resin composition was 1.08 times as large as the number of moles of epoxy groups in the second epoxy resin composition. The storage elastic modulus G' at 25°C of the second epoxy resin composition was 1.0 × 10⁶ Pa, and the component [C] in the second epoxy resin composition accounted for 20 mass%.

In addition, using TORAYCA (registered trademark) T800G-24K as the component [A] and also using the first epoxy resin composition and the second epoxy resin composition prepared above, a prepreg was produced by the procedure described in the above paragraph (4). In the resulting prepreg, 96 mass% of the component [A] existed in the reinforcing fiber layer (ranging from 8% to 92% depth from the surface) and 98 mass% of the component [E] existed in the surface resin layer (ranging from either surface to a depth of 8% exclusive). In addition, in the evaluation in terms of deposition of resin/fuzz on the path line and cutter blade during slit tape processing, it was rated as A for both evaluation items, showing high slit tape processability. It had a peel strength of 0.2 N/mm after standing for 24 hours at room temperature and suffered no rupture after moving back and forth 10 times on the roll in the splicing test, proving that it was acceptable. The carbon fiber composite material had an interlayer fracture toughness (G_{lc}) of 621 J/m² and a compression strength after impact (CAI) of 330 MPa, both being satisfactorily high.

### <Example 2>

A first epoxy resin composition and a second epoxy resin composition were prepared from the components specified in the column under Example 2 in Table 1. The number of moles of active hydrogen in the second epoxy resin composition was 1.02 times as large as the number of moles of epoxy groups in the second epoxy resin composition. The storage elastic modulus G' at 25°C of the second epoxy resin composition was 9.8 × 10⁵ Pa, and the component [C] in the second epoxy resin composition accounted for 15 mass%.

Using the first and second epoxy resin compositions described above, a prepreg was prepared in the same way as in Example 1. In the resulting prepreg, 97 mass% of the component [A] existed in the reinforcing fiber layer and 96 mass% of the component [E] existed in the surface resin layer. In addition, in terms of deposition of resin/fuzz on the path line and cutter blade during slit tape processing, it was rated as A, showing good quality. It had a peel strength of 0.2 N/mm after standing for 24 hours at room temperature and it was proved to be acceptable in the splicing test. The carbon fiber composite material had an interlayer fracture toughness (G_{lc}) of 675 J/m² and a compression strength after impact (CAI) of 365 MPa, both being satisfactorily high.

### <Example 3>

A first epoxy resin composition and a second epoxy resin composition were prepared from the components specified in the column under Example 3 in Table 1. The number of moles of active hydrogen in the second epoxy resin composition was 1.14 times as large as the number of moles of epoxy groups in the second epoxy resin composition. The storage elastic modulus G' at 25°C of the second epoxy resin composition was 1.8 × 10⁵ Pa, and the component [C] in the second epoxy resin composition accounted for 15 mass%.

Using the first and second epoxy resin compositions described above, a prepreg was prepared in the same way as in Example 1. In the resulting prepreg, 94 mass% of the component [A] existed in the reinforcing fiber layer and 97 mass% of the component [E] existed in the surface resin layer. In terms of deposition of resin/fuzz during slit tape processing, furthermore, it was rated as C in the path line test and B in the cutter blade test, but served satisfactorily in slit tape production. It had a peel strength of 0.1 N/mm after standing for 24 hours at room temperature and it was proved to be acceptable in the splicing test. The carbon fiber composite material had an interlayer fracture toughness (G_{lc}) of 525 J/m² and a compression strength after impact (CAI) of 368 MPa.

### <Example 4>

A first epoxy resin composition and a second epoxy resin composition were prepared from the components specified in the column under Example 4 in Table 1. The number of moles of active hydrogen in the second epoxy resin composition was 1.08 times as large as the number of moles of epoxy groups in the second epoxy resin composition. The storage elastic modulus G' at 25°C of the second epoxy resin composition was 1.0 × 10⁵ Pa, and the component [C] in the second epoxy resin composition accounted for 10 mass%.

Using the first and second epoxy resin compositions described above, a prepreg was prepared in the same way as in Example 1. In the resulting prepreg, 92 mass% of the component [A] existed in the reinforcing fiber layer and 95 mass% of the component [E] existed in the surface resin layer. In terms of deposition of resin/fuzz on the path line and cutter blade during slit tape processing, furthermore, it was rated as C in both tests, but served satisfactorily in slit tape production. It had a peel strength of 0.1 N/mm after standing for 24 hours at room temperature and it was proved to be acceptable in the splicing test. The carbon fiber composite material had an interlayer fracture toughness (G_{lc}) of 560 J/m² and a compression strength after impact (CAI) of 378 MPa.

### <Example 5>

A first epoxy resin composition and a second epoxy resin composition were prepared from the components specified in the column under Example 5 in Table 1. The number of moles of active hydrogen in the second epoxy resin composition was 0.89 times as large as the number of moles of epoxy groups in the second epoxy resin composition. The storage elastic modulus G' at 25°C of the second epoxy resin composition was 1.0 × 10⁵ Pa, and the component [C] in the second epoxy resin composition accounted for 8 mass%.

Using the first and second epoxy resin compositions described above, a prepreg was prepared in the same way as in Example 1. In the resulting prepreg, 95 mass% of the component [A] existed in the reinforcing fiber layer and 96 mass% of the component [E] existed in the surface resin layer. In addition, in terms of deposition of resin/fuzz during slit tape processing, it was rated as A in the path line test and C in the cutter blade test, showing good quality. It had a peel strength of 0.1 N/mm after standing for 24 hours at room temperature and it was proved to be acceptable in the splicing test. The carbon fiber composite material had an interlayer fracture toughness (G_{lc}) of 589 J/m² and a compression strength after impact (CAI) of 366 MPa.

### <Example 6>

A first epoxy resin composition and a second epoxy resin composition were prepared from the components specified in the column under Example 6 in Table 1. The number of moles of active hydrogen in the second epoxy resin composition was 0.96 times as large as the number of moles of epoxy groups in the second epoxy resin composition. The storage elastic modulus G' at 25°C of the second epoxy resin composition was 2.9 × 10⁵ Pa, and the component [C] in the second epoxy resin composition accounted for 15 mass%.

Using the first and second epoxy resin compositions described above, a prepreg was prepared in the same way as in Example 1. In the resulting prepreg, 94 mass% of the component [A] existed in the reinforcing fiber layer and 97 mass% of the component [E] existed in the surface resin layer. In addition, in terms of deposition of resin/fuzz during slit tape processing, it was rated as B in both the path line and cutter blade tests, showing good quality. It had a peel strength of 0.2 N/mm after standing for 24 hours at room temperature and it was proved to be acceptable in the splicing test. The carbon fiber composite material had an interlayer fracture toughness (G_{lc}) of 590 J/m² and a compression strength after impact (CAI) of 372 MPa.

### <Example 7>

A first epoxy resin composition and a second epoxy resin composition were prepared from the components specified in the column under Example 7 in Table 1. The number of moles of active hydrogen in the second epoxy resin composition was 1.08 times as large as the number of moles of epoxy groups in the second epoxy resin composition. The storage elastic modulus G' at 25°C of the second epoxy resin composition was 3.0 × 10⁵ Pa, and the component [C] in the second epoxy resin composition accounted for 15 mass%.

Using the first and second epoxy resin compositions described above, a prepreg was prepared in the same way as in Example 1. In the resulting prepreg, 95 mass% of the component [A] existed in the reinforcing fiber layer and 96 mass% of the component [E] existed in the surface resin layer. In terms of deposition of resin/fuzz during slit tape processing, furthermore, it was rated as C in both the path line and cutter blade tests, but served satisfactorily in the processing. It had a peel strength of 0.2 N/mm after standing for 24 hours at room temperature and it was proved to be acceptable in the splicing test. The carbon fiber composite material had an interlayer fracture toughness (G_{lc}) of 655 J/m² and a compression strength after impact (CAI) of 346 MPa.

### <Example 8>

A first epoxy resin composition and a second epoxy resin composition were prepared from the components specified in the column under Example 8 in Table 1. The number of moles of active hydrogen in the second epoxy resin composition was 1.08 times as large as the number of moles of epoxy groups in the second epoxy resin composition. The storage elastic modulus G' at 25°C of the second epoxy resin composition was 3.2 × 10⁵ Pa, and the component [C] in the second epoxy resin composition accounted for 15 mass%.

Using the first and second epoxy resin compositions described above, a prepreg was prepared in the same way as in Example 1. In the resulting prepreg, 98 mass% of the component [A] existed in the reinforcing fiber layer and 98 mass% of the component [E] existed in the surface resin layer. In terms of deposition of resin/fuzz during slit tape processing, furthermore, it was rated as B in both the path line and cutter blade tests, showing good quality. It had a peel strength of 0.2 N/mm after standing for 24 hours at room temperature and it was proved to be acceptable in the splicing test. The carbon fiber composite material had an interlayer fracture toughness (G_{lc}) of 651 J/m² and a compression strength after impact (CAI) of 369 MPa.

### <Example 9>

A first epoxy resin composition and a second epoxy resin composition were prepared from the components specified in the column under Example 9 in Table 1. The number of moles of active hydrogen in the second epoxy resin composition was 1.08 times as large as the number of moles of epoxy groups in the second epoxy resin composition. The storage elastic modulus G' at 25°C of the second epoxy resin composition was 3.0 × 10⁶ Pa, and the component [C] in the second epoxy resin composition accounted for 24 mass%.

Using the first and second epoxy resin compositions described above, a prepreg was prepared in the same way as in Example 1. In the resulting prepreg, 93 mass% of the component [A] existed in the reinforcing fiber layer and 98 mass% of the component [E] existed in the surface resin layer. In addition, in terms of deposition of resin/fuzz during slit tape processing, it was rated as A in both the path line and cutter blade tests, showing good quality. It had a peel strength of 0.1 N/mm after standing for 24 hours at room temperature and it was proved to be acceptable in the splicing test. The carbon fiber composite material had an interlayer fracture toughness (G_{lc}) of 689 J/m² and a compression strength after impact (CAI) of 375 MPa.

### <Example 10>

A first epoxy resin composition and a second epoxy resin composition were prepared from the components specified in the column under Example 10 in Table 1. The number of moles of active hydrogen in the second epoxy resin composition was 1.99 times as large as the number of moles of epoxy groups in the second epoxy resin composition. The storage elastic modulus G' at 25°C of the second epoxy resin composition was 3.0 × 10⁶ Pa, and the component [C] in the second epoxy resin composition accounted for 13 mass%.

Using the first and second epoxy resin compositions described above, a prepreg was prepared in the same way as in Example 1. In the resulting prepreg, 97 mass% of the component [A] existed in the reinforcing fiber layer and 97 mass% of the component [E] existed in the surface resin layer. In addition, in terms of deposition of resin/fuzz during slit tape processing, it was rated as A in both the path line and cutter blade tests, showing good quality. It had a peel strength of 0.1 N/mm after standing for 24 hours at room temperature and it was proved to be acceptable in the splicing test. The carbon fiber composite material had an interlayer fracture toughness (G_{lc}) of 600 J/m² and a compression strength after impact (CAI) of 370 MPa.

### [Comparative example 1]

A first epoxy resin composition and a second epoxy resin composition were prepared from the components specified in the column under Comparative example 1 in Table 2. The number of moles of active hydrogen in the second epoxy resin composition was 1.08 times as large as the number of moles of epoxy groups in the second epoxy resin composition. The storage elastic modulus G' at 25°C of the second epoxy resin composition was 4.0 × 10⁴ Pa, and the component [C] in the second epoxy resin composition accounted for 7 mass%.

Using the first and second epoxy resin compositions described above, a prepreg was prepared in the same way as in Example 1. In the resulting prepreg, 95 mass% of the component [A] existed in the reinforcing fiber layer and 96 mass% of the component [E] existed in the surface resin layer. In addition, significant deposition of resin/fuzz on the path line and cutter blade occurred during slit tape processing, making the processing impossible. It had a peel strength of 0 N/mm after standing for 24 hours at room temperature and it succeeded in only three of the ten test runs in the splicing test, proving that it was unacceptable. The carbon fiber composite material had an interlayer fracture toughness (G_{lc}) of 501 J/m² and a compression strength after impact (CAI) of 360 MPa.

### [Comparative example 2]

A first epoxy resin composition and a second epoxy resin composition were prepared from the components specified in the column under Comparative example 2 in Table 2. The number of moles of active hydrogen in the second epoxy resin composition was 0.89 times as large as the number of moles of epoxy groups in the second epoxy resin composition. The storage elastic modulus G' at 25°C of the second epoxy resin composition was 1.2 × 10⁶ Pa, and the component [C] in the second epoxy resin composition accounted for 10 mass%. Using the first and second epoxy resin compositions described above, a prepreg was prepared in the same way as in Example 1. In the resulting prepreg, 95 mass% of the component [A] existed in the reinforcing fiber layer and 97 mass% of the component [E] existed in the surface resin layer. In addition, in terms of deposition of resin/fuzz on the path line and cutter blade during slit tape processing, it was rated as A in both tests, showing good quality. However, it had a peel strength of 0 N/mm after standing for 24 hours at room temperature and it succeeded in only five of the ten test runs in the splicing test, proving that it was unacceptable. The carbon fiber composite material had an interlayer fracture toughness (G_{lc}) of 715 J/m² and a compression strength after impact (CAI) of 372 MPa.

### [Comparative example 3]

A first epoxy resin composition and a second epoxy resin composition were prepared from the components specified in the column under Comparative example 3 in Table 2. The number of moles of active hydrogen in the second epoxy resin composition was 1.08 times as large as the number of moles of epoxy groups in the second epoxy resin composition. The storage elastic modulus G' at 25°C of the second epoxy resin composition was 3.0 × 10³ Pa, and the component [C] in the second epoxy resin composition accounted for 18 mass%. Using the first and second epoxy resin compositions described above, a prepreg was prepared in the same way as in Example 1. In the resulting prepreg, 93 mass% of the component [A] existed in the reinforcing fiber layer. In addition, significant deposition of resin/fuzz on the path line and cutter blade occurred during slit tape processing, making the processing impossible. It had a peel strength of 0 N/mm after standing for 24 hours at room temperature and it succeeded in only two of the ten test runs in the splicing test, proving that it was unacceptable. The carbon fiber composite material had an interlayer fracture toughness (G_{lc}) of 615 J/m² and a compression strength after impact (CAI) of 238 MPa. The absence of the component [E] resulted in a very large decrease in CAI.

### [Comparative example 4]

A first epoxy resin composition and a second epoxy resin composition were prepared from the components specified in the column under Comparative example 4 in Table 2. The number of moles of active hydrogen in the second epoxy resin composition was 2.24 times as large as the number of moles of epoxy groups in the second epoxy resin composition. The storage elastic modulus G' at 25°C of the second epoxy resin composition was 5.0 × 10⁶ Pa, and the component [C] in the second epoxy resin composition accounted for 16 mass%. Using the first and second epoxy resin compositions described above, a prepreg was prepared in the same way as in Example 1. In the resulting prepreg, 95 mass% of the component [A] existed in the reinforcing fiber layer and 98 mass% of the component [E] existed in the surface resin layer. In addition, in terms of deposition of resin/fuzz on the path line and cutter blade during slit tape processing, it was rated as B, showing good quality. However, it had a peel strength of 0 N/mm after standing for 24 hours at room temperature and it succeeded in only two of the ten test runs in the splicing test, proving that it was unacceptable. The carbon fiber composite material had an interlayer fracture toughness (G_{lc}) of 554 J/m² and a compression strength after impact (CAI) of 361 MPa.

### [Comparative example 5]

A first epoxy resin composition and a second epoxy resin composition were prepared from the components specified in the column under Comparative example 5 in Table 2. The number of moles of active hydrogen in the second epoxy resin composition was 1.09 times as large as the number of moles of epoxy groups in the second epoxy resin composition. The storage elastic modulus G' at 25°C of the second epoxy resin composition was 3.5 × 10⁶ Pa, and the component [C] in the second epoxy resin composition accounted for 25 mass%. Using the first and second epoxy resin compositions described above, a prepreg was prepared in the same way as in Example 1. In the resulting prepreg, 93 mass% of the component [A] existed in the reinforcing fiber layer and 98 mass% of the component [E] existed in the surface resin layer. In addition, in terms of deposition of resin/fuzz on the path line and cutter blade during slit tape processing, it was rated as A in both tests, showing good quality. However, it had a peel strength of 0 N/mm after standing for 24 hours at room temperature and it succeeded in only three of the ten test runs in the splicing test, proving that it was unacceptable. The carbon fiber composite material had an interlayer fracture toughness (G_{lc}) of 634 J/m² and a compression strength after impact (CAI) of 374 MPa.

### [Table 1-1]

**[Table 1-1]**

| | | | | Example 1 | | Example 2 | | Example 3 | | Example 4 | | Example 5 | |
|---|---|---|---|---|---|---|---|---|---|---|---|---|---|
| | | 1: first epoxy resin composition 2: second epoxy resin composition | | 1 | 2 | 1 | 2 | 1 | 2 | 1 | 2 | 1 | 2 |
| component [B] | [b1] | N,N-diglycidyl-4-phenoxy aniline (TOREP^{®} A-204E) | parts | 35 | 35 | 20 | 20 | 50 | 50 | 35 | 35 | 35 | 35 |
| | | N-diglycidyl aniline (GAN) | parts | | | | | | | | | | |
| | [b2] | triglycidyl-p-aminophenol (jER^{®} 630) | parts | 65 | 65 | 80 | 80 | 50 | 50 | 65 | 65 | | |
| | | tetraglycidyl diaminodiphenylmethane (Araldite^{®} MY721) | parts | | | | | | | | | 65 | 65 |
| component [C] | | polyethersulfone (Virantage^{®} 10700) | parts | 35 | 52 | 35 | 45 | 35 | 45 | 35 | 27 | 35 | 20 |
| | | polyethersulfone (Sumika Excel^{®} PES5003P) | parts | | | | | | | | | | |
| component [D] | | 4,4'-diaminodiphenyl sulfone (SEIKACURE^{®} S) | parts | 60 | 60 | 60 | 60 | 60 | 60 | 60 | 60 | 45 | 45 |
| | | 3,3'-diaminodiphenyl sulfone (3,3'-DAS) | parts | | | | | | | | | | |
| component [E] | | polyamide particles (Toraypearl^{®} TN) | parts | | 53 | | 90 | | 90 | | 90 | | 90 |
| | | polyamide particles (Orgasol^{®} 1002D) | parts | | | | | | | | | | |
| content of component [C] in resin composition | | | mass % | 18% | 20% | 20% | 15% | 20% | 15% | 20% | 10% | 20% | 8% |
| number of moles of active hydrogen/number of moles of epoxy group | | | - | 1.08 | | 1.02 | | 1.14 | | 1.08 | | 0.89 | |
| physical properties resin composition of second | | storage elastic modulus G' at 25°C | Pa | 1.0×10⁶ | | 9.8×10⁵ | | 1.8×10⁵ | | 1.0×10⁵ | | 1.0×10⁵ | |
| characteristics of prepreg | proportion of component [A] existing in reinforcing resin layer ranging from 8% to 92% depth in thickness direction from prepreg surface | | mass % | 96 | | 97 | | 94 | | 92 | | 95 | |
| | proportion of component [E] existing in the region ranging from either surface of prepreg to 8% (exclusive) depth in thickness direction | | mass % | 98 | | 96 | | 97 | | 95 | | 96 | |
| | peel strength (after standing for **24** hours) | | N/mm | 0.2 | | 0.2 | | 0.1 | | 0.1 | | 0.1 | |
| slit tape processability | deposition of resin/fuzz | path line | mg | 213 | | 217 | | 295 | | 295 | | 292 | |
| | | evaluation (A: <250, B: 250 to 275, C: 275 to 300, D: 300≤) | - | A | | A | | C | | C | | A | |
| | | cutter blade | mg | 2.1 | | 2.2 | | 5.7 | | 9.7 | | 9.5 | |
| | | evaluation (A: less than 3.5, B: 3.5 to 7.0, C: 7.0 to 10.5, D: 10.5 or more) | - | A | | A | | B | | C | | C | |
| | | number of times of successful splicing | times | 10/10 | | 10/10 | | 10/10 | | 10/10 | | 10/10 | |
| | | evaluation (∘: 10 times, ×: unsuccessful once or more) | - | ○ | | ○ | | ○ | | ○ | | ○ | |
| characteristics of fiber reinforced composite material | | interlayer fracture toughness (G_{lc}) | J/m² | 621 | | 675 | | 525 | | 560 | | 589 | |
| | | CAI | MPa | 330 | | 365 | | 368 | | 378 | | 366 | |

### [Table 1-2]

**[Table 1-2]**

| | | | | Example 6 | | Example 7 | | Example 8 | | Example 9 | | Example 10 | |
|---|---|---|---|---|---|---|---|---|---|---|---|---|---|
| | | 1: first epoxy resin composition 2: second epoxy composition resin | | 1 | 2 | 1 | 2 | 1 | 2 | 1 | 2 | 1 | 2 |
| component [B] | [b1] | N,N-diglycidyl-4-phenoxy aniline (TOREP^{®} A-204E) | parts | | | 35 | 35 | 35 | 35 | 35 | 35 | 35 | 35 |
| | | N-diglycidyl aniline (GAN) | parts | 35 | 35 | | | | | | | | |
| | [b2] | triglycidyl-p-aminophenol (ER^{®} 630) | parts | 65 | 65 | 65 | 65 | 65 | 65 | 65 | 65 | 65 | 65 |
| | | tetraglycidyl diaminodiphenylmethane (Araldite^{®} MY721) | parts | | | | | | | | | | |
| component [C] | | polyethersulfone (Virantage^{®} 10700) | parts | 35 | 45 | 35 | 45 | 35 | 45 | 35 | 80 | 35 | 45 |
| | | polyethersulfone (Sumika Excel^{®} PES5003P) | parts | | | | | | | | | | |
| component [D] | | 4,4'-diaminodiphenyl sulfone (SEIKACURE^{®} S) | parts | 60 | 60 | | | 60 | 60 | | | 60 | 111 |
| | | 3,3'-diaminodiphenyl sulfone (3,3'-DAS) | parts | | | 60 | 60 | | | 60 | 60 | | |
| component [E] | | polyamide particles (Toraypearl^{®} TN) | parts | | 90 | | 90 | | | | 95 | | 90 |
| | | polyamide particles (Orgasol^{®} 1002D) | parts | | | | | | 90 | | | | |
| content of component [C] in resin composition | | | mass % | 18% | 15% | 18% | 15% | 18% | 15% | 18% | 24% | 18% | 13% |
| number of moles of active hydrogen/number of moles of epoxy group | | | - | 0.96 | | 1.08 | | 1.08 | | 1.08 | | 1.99 | |
| physical properties resin of second composition | | storage elastic modulus G' at 25°C | Pa | 2.9×10⁵ | | 3.0×10⁵ | | 3.2×10⁵ | | 3.0×10⁶ | | 3.0×10⁶ | |
| characteristics of prepreg | proportion of component [A] existing in reinforcing resin layer ranging from 8% to 92% depth in thickness direction from prepreg surface | | mass % | 94 | | 95 | | 98 | | 93 | | 97 | |
| | proportion of component [E] existing in the region ranging from either surface of prepreg to 8% (exclusive) depth in thickness direction | | mass % | 97 | | 96 | | 98 | | 98 | | 97 | |
| | peel strength (after standing for 24 hours) | | N/mm | 0.2 | | 0.2 | | 0.2 | | 0.1 | | 0.1 | |
| slit tape processability | deposition of resin/fuzz | path line | mg | 270 | | 287 | | 263 | | 150 | | 206 | |
| | | evaluation (A: <250, B: 250 to 275, C: 275 to 300, D: 300≤) | - | B | | C | | B | | A | | A | |
| | | cutter blade | mg | 5.3 | | 7.0 | | 4.5 | | 0.5 | | 2.2 | |
| | | evaluation (A: less than 3.5, B: 3.5 to 7.0, C: 7.0 to 10.5, D: 10.5 or more) | - | B | | C | | B | | A | | A | |
| | | number of times of successful splicing | times | 10/10 | | 10/10 | | 10/10 | | 10/10 | | 10/10 | |
| | | evaluation (∘: 10 times, ×: unsuccessful once or more) | - | ○ | | ○ | | ○ | | ○ | | ○ | |
| characteristics of fiber reinforced composite material | | interlayer fracture toughness (G_{Ic}) | J/m² | 590 | | 655 | | 651 | | 689 | | 600 | |
| | | CAI | MPa | 372 | | 346 | | 369 | | 375 | | 370 | |

### [Table 2]

**[Table 2]**

| | | | | Comparative example 1 | | Comparative example 2 | | Comparative example 3 | | Comparative example 4 | | Comparative example 5 | |
|---|---|---|---|---|---|---|---|---|---|---|---|---|---|
| | | 1: first epoxy resin composition 2: second epoxy resin composition | | 1 | 2 | 1 | 2 | 1 | 2 | 1 | 2 | 1 | 2 |
| component [B] | [b1] | N,N-diglycidyl-4-phenoxy aniline (TOREP^{®} A-204E) | parts | 35 | 35 | 35 | 35 | 35 | 35 | 35 | 35 | 35 | 35 |
| | | N-diglycidyl aniline (GAN) | parts | | | | | | | | | | |
| | [b2] | triglycidyl-p-aminophenol (jER^{®} 630) | parts | 65 | 65 | | | 65 | 65 | | | 65 | 65 |
| | | tetraglycidyl diaminodiphenylmethane (Araldite^{®} MY721) | parts | | | 65 | 65 | | | 65 | 65 | | |
| component [C] | | polyethersulfone (Virantage^{®} 10700) | parts | 35 | 20 | | | 35 | 35 | | | 35 | 85 |
| | | polyethersulfone (Sumika Excel^{®} PES5003P) | parts | | | 25 | 26 | | | 35 | 60 | | |
| component [D] | | 4,4'-diaminodiphenyl sulfone (SEIKACURE^{®} S) | parts | 60 | 60 | 45 | 45 | 60 | 60 | 35 | 125 | 60 | 61 |
| | | 3,3'-diaminodiphenyl sulfone (3,3'-DAS) | parts | | | | | | | | | | |
| component [E] | | polyamide particles (Toraypearl^{®} TN) | parts | | 90 | | 80 | | | | 90 | | 95 |
| | | polyamide particles (Orgasol^{®} 1002D) | parts | | | | | | | | | | |
| content of component [C] in resin composition | | | mass % | 18% | 7% | 15% | 10% | 18% | 18% | 21% | 16% | 18% | 25% |
| number of moles of active hydrogen/number of moles of epoxy group | | | - | 1.08 | | 0.89 | | 1.08 | | 2.24 | | 1.09 | |
| physical properties of second resin composition | | storage elastic modulus G' at 25°C | Pa | 4.0×10⁴ | | 1.2×10⁶ | | 3.0×10³ | | 5.0×10⁶ | | 3.5×10⁶ | |
| characteristics of prepreg | proportion of component [A] existing in reinforcing resin layer ranging from 8% to 92% depth in thickness direction from prepreg surface | | mass % | 95 | | 95 | | 93 | | 95 | | 93 | |
| | proportion of component [E] existing in the region ranging from either surface of prepreg to 8% (exclusive) depth in thickness direction | | mass % | 96 | | 97 | | 0 | | 98 | | 98 | |
| | peel strength (after standing for 24 hours) | | N/mm | 0 | | 0 | | 0 | | 0 | | 0 | |
| slit tape processability | deposition of resin/fuzz | path line | mg | - | | 202 | | - | | 252 | | 150 | |
| | | evaluation (A: <250, B: 250 to 275, C: 275 to 300, D: 300≤) | - | impossible | | A | | impossible | | B | | A | |
| | | cutter blade | mg | - | | 1.0 | | - | | 5.3 | | 0.2 | |
| | | evaluation (A: less than 3.5, B: 3.5 to 7.0, C: 7.0 to 10.5, D: 10.5 or more) | - | impossible | | A | | impossible | | B | | A | |
| | | number of times of successful splicing | times | 3/10 | | 5/10 | | 2/10 | | 2/10 | | 3/10 | |
| | | evaluation (∘: 10 times, ×: unsuccessful once or more) | - | × | | × | | × | | × | | × | |
| characteristics of fiber reinforced composite material | | interlayer fracture toughness (G_{Ic}) | J/m² | 501 | | 715 | | 615 | | 554 | | 634 | |
| | | CAI | MPa | 360 | | 372 | | 238 | | 361 | | 374 | |

### EXPLANATION OF NUMERALS

1. prepreg
2. block

## Claims

1. A prepreg comprising the components [A] to [E] given below,
meeting the requirements (i) to (iii) given below, and
serving to produce a cured product having
a reinforcing fiber layer defined as the region ranging from 8% to 92% depth from the surface in the thickness direction that contains a first epoxy resin composition in which 90 mass% or
more of the component [A] exists, and two surface resin layers each defined as the region ranging from either surface to a depth of 8% exclusive in the thickness direction that contain a second epoxy resin composition in which 85 mass% or more of the component [E] exists,
(i) the second epoxy resin composition includes the components [B] to [E] of which the component [C] accounts for 8 to 24 parts by mass relative to 100 parts by mass of the second epoxy resin composition,
(ii) the second epoxy resin composition has a storage elastic modulus G' in the range of 1.0 × 10⁴ to 3.0 × 10⁶ Pa when measured by a method according to the description at 25°C and at an angular frequency of 3.14 rad/s, and
(iii) plies of the prepreg laid up after being left to stand for 24 hours at room temperature show a peel strength of 0.1 N/mm or more measured by a method according to the description at 35°C,
[A] a carbon fiber,
[B] an epoxy resin containing the components [b1] and [b2] specified below,
[b1] a di- or less- functional epoxy resin containing, in a molecule, at least one ring structure having four- or more- membered ring and a glycidyl amine group bonded to a ring structure,
[b2] a tri- or more- functional epoxy resin,
[C] a thermoplastic resin with a weight-average molecular weight of 2,000 to 30,000 g/mol measured by a method according to the description,
[D] diaminodiphenyl sulfone,
[E] particles having a volume-average particle size of 5 to 50 µm measured by a method according to the description and insoluble in the component [B] as determined by a method according to the description, wherein the material of the particles of the component [E] is a thermosetting resin, thermoplastic resin, or a mixture thereof.

2. A prepreg as set forth in claim 1, wherein the component [C] accounts for 8 to 20 parts by mass relative to 100 parts by mass of the second epoxy resin composition.

3. A prepreg as set forth in either claim 1 or 2, wherein the second epoxy resin composition has a storage elastic modulus G' in the range of 1.0 × 10⁵ to 1.0 × 10⁶ Pa when measured by a method according to the description at 25°C and at an angular frequency of 3.14 rad/s.

4. A prepreg as set forth in any one of claims 1 to 3, wherein the component [b1] accounts for 20 to 50 parts by mass and the component [b2] accounts for 50 to 80 parts by mass relative to the total quantity, which accounts for 100 parts by mass, of the component [B].

5. A prepreg as set forth in any one of claims 1 to 4, wherein the number of moles of active hydrogen contained in the component [D] is 1.05 to 2.0 times as large as the number of moles of epoxy groups contained in the second epoxy resin composition.

6. A fiber reinforced composite material produced by curing a prepreg as set forth in any one of claims 1 to 5.

## Patentansprüche

1. Prepreg, umfassend die nachfolgend dargelegten Komponenten [A] bis [E],
die die nachfolgend dargelegten Anforderungen (i) bis (iii) erfüllen und
die zur Herstellung eines gehärteten Produkts dienen, das eine Verstärkungsfaserschicht, die als der Bereich definiert ist, der von der Oberfläche in der Richtung der Dicke in eine Tiefe von 8 % bis 92 % reicht, die eine erste Epoxidharzzusammensetzung enthält, in der 90 Massen-% oder mehr der Komponente [A] vorhanden sind, und zwei Oberflächenharzschichten aufweist, von denen jede als der Bereich definiert ist, der von jeder Oberfläche ausschließlich in Richtung der Dicke bis auf eine Tiefe von 8 % reicht, die eine zweite Epoxidharzzusammensetzung enthalten, in der 85 Massen-% oder mehr der Komponente [E] vorhanden sind,
(i) die zweite Epoxidharzzusammensetzung umfasst die Komponenten [B] bis [E], von denen die Komponente [C] 8 bis 24 Massenteile bezogen auf 100 Massenteile der zweiten Epoxidharzzusammensetzung ausmacht,
(ii) die zweite Epoxidharzzusammensetzung weist einen Lagerungs-Elastizitätsmodul G' im Bereich von 1,0 x 10⁴ bis 3,0 x 10⁶ Pa auf, wenn durch ein Verfahren gemäß der Beschreibung bei 25 °C und bei einer Winkelfrequenz von 3,14 rad/s gemessen, und
(iii) Schichten des Prepregs, die ausgelegt wurden, nachdem sie 24 h bei Raumtemperatur stehen gelassen wurden, weisen eine Abschälfestigkeit von 0,1 N/mm oder mehr auf, wie durch ein Verfahren gemäß der Beschreibung bei 35 °C gemessen,
[A] eine Kohlenstofffaser,
[B] ein Epoxidharz, das die nachfolgend angegebenen Komponenten [b1] und [b2] enthält,
[b1] ein di- oder weniger funktionelles Epoxidharz, das in einem Molekül zumindest eine Ringstruktur enthält, die einen vier- oder höher gliedrigen Ring und eine Glycidylamin-Gruppe enthält, die an eine Ringstruktur gebunden ist,
[b2] ein tri- oder höher funktionelles Epoxidharz,
[C] ein thermoplastisches Harz mit einem gewichtsmittleren Molekulargewicht von 2.000 bis 30.000 g/mol, gemessen durch ein Verfahren gemäß der Beschreibung,
[D] Diaminodiphenylsulfon,
[E] Teilchen, die eine volumenmittlere Teilchengröße von 5 bis 50 µm aufweisen, wie durch ein Verfahren gemäß der Beschreibung gemessen, und die in der Komponente [B] unlöslich sind, wie durch ein Verfahren gemäß der Beschreibung gemessen, wobei das Material der Teilchen der Komponente [E] ein duroplastisches Harz, ein thermoplastisches Harz oder ein Gemisch daraus ist.

2. Prepreg wie in Anspruch 1 dargelegt, wobei die Komponente [C] 8 bis 20 Massenteile bezogen auf 100 Massenteile der zweiten Epoxidharzzusammensetzung ausmacht.

3. Prepreg wie in Anspruch 1 oder 2 dargelegt, wobei die zweite Epoxidharzzusammensetzung einen Lagerungs-Elastizitätsmodul G' im Bereich von 1,0 x 10⁵ bis 1,0 x 10⁶ Pa aufweist, wenn durch ein Verfahren gemäß der Beschreibung bei 25 °C und einer Winkelfrequenz von 3,14 rad/s gemessen.

4. Prepreg wie in einem der Ansprüche 1 bis 3 dargelegt, wobei die Komponente [b1] 20 bis 50 Massenteile und die Komponente [b2] 50 bis 80 Massenteile bezogen auf die Gesamtmenge, die 100 Massenteile ausmacht, der Komponente [B] ausmacht.

5. Prepreg wie in einem der Ansprüche 1 bis 4 dargelegt, wobei die Molzahl von aktivem Wasserstoff, der in der Komponente [D] enthalten ist, das 1,05- bis 2,0-Fache der Molzahl von Epoxidgruppen beträgt, die in der zweiten Epoxidharzzusammensetzung enthalten sind.

6. Faserverstärktes Verbundmaterial, erzeugt durch Härten eines Prepregs wie in einem der Ansprüche 1 bis 5 dargelegt.

## Revendications

1. Préimprégné comprenant les composants [A] à [E] indiqués ci-dessous,
satisfaisant aux exigences (i) à (iii) indiquées ci-dessous, et
servant à produire un produit durci ayant
une couche de fibres de renforcement définie comme étant la région à une profondeur de 8 % à 92 % par rapport à la surface dans le sens de l'épaisseur qui contient une première composition de résine époxy dans laquelle 90 % en masse ou plus du composant [A] existent, et deux couches de résine de surface définies chacune comme étant la région allant de l'une ou l'autre surface jusqu'à une profondeur de 8 % à l'exclusion de cette valeur dans le sens de l'épaisseur, qui contiennent une deuxième composition de résine époxy dans laquelle 85 % en masse ou plus du composant [E] existent,
(i) la deuxième composition de résine époxy contient les composants [B] à [E] parmi lesquels le composant [C] représente 8 à 24 parties en masse pour 100 parties en masse de la deuxième composition de résine époxy,
(ii) la deuxième composition de résine époxy a un module élastique au stockage G' situé dans la plage allant de 1,0 x 10⁴ à 3,0 x 10⁶ Pa quand il est mesuré par un procédé conformément à la description à 25°C et à une fréquence angulaire de 3,14 rad/s, et
(iii) les couches du préimprégné empilé après avoir été laissé à reposer pendant 24 heures à la température ambiante présentent une résistance au pelage de 0,1 N/mm ou plus, mesurée par un procédé conformément à la description à 35°C,
[A] une fibre de carbone,
[B] une résine époxy contenant les composants [b1] et [b2] spécifiés ci-dessous,
[b1] une résine époxy bifonctionnelle ou à fonctionnalité moindre contenant, dans une molécule, au moins une structure cyclique ayant un cycle à quatre chaînons ou plus et un groupe glycidylamine lié à une structure cyclique,
[b2] une résine époxy trifonctionnelle ou à fonctionnalité supérieure,
[C] une résine thermoplastique ayant une masse moléculaire moyenne en masse de 2 000 à 30 000 g/mol, mesurée par un procédé conformément à la description,
[D] de la diaminodiphénylsulfone,
[E] des particules ayant une granulométrie moyenne en volume de 5 à 50 µm, mesurée par un procédé conformément à la description, et insolubles dans le composant [B], comme déterminé par un procédé conformément à la description, dans lesquelles le matériau des particules du composant [E] est une résine thermodurcissable, une résine thermoplastique, ou un de leurs mélanges.

2. Préimprégné selon la revendication 1, dans lequel le composant [C] représente 8 à 20 parties en masse pour 100 parties en masse de la deuxième composition de résine époxy.

3. Préimprégné selon l'une ou l'autre des revendications 1 et 2, dans lequel la deuxième composition de résine époxy a un module élastique au stockage G' situé dans la plage allant de 1,0 x 10⁵ à 1,0 x 10⁶ Pa quand il est mesuré par un procédé conformément à la description à 25°C et à une fréquence angulaire de 3,14 rad/s.

4. Préimprégné selon l'une quelconque des revendications 1 à 3, dans lequel le composant [b1] représente 20 à 50 parties en masse et le composant [b2] représente 50 à 80 parties en masse par rapport à la quantité totale, qui représente 100 parties en masse, du composant [B].

5. Préimprégné selon l'une quelconque des revendications 1 à 4, dans lequel le nombre de moles d'hydrogène actif contenues dans le composant [D] est de 1,05 à 2,0 fois le nombre de moles de groupes époxy contenues dans la deuxième composition de résine époxy.

6. Matériau composite renforcé par des fibres produit par durcissement d'un préimprégné selon l'une quelconque des revendications 1 à 5.
